# EUROPÄISCHE PATENTSCHRIFT

(11) **EP 1 133 646 B1**
(45) Veröffentlichungstag und Bekanntmachung des Hinweises auf die Patenterteilung: **07.08.2002**
(21) Anmeldenummer: 99973105.2
(22) Anmeldetag: 06.11.1999
(51) Int. Cl.: F16D 41/00

(54) **KLEMMROLLENSCHALTWERK**
CLAMP ROLLER RATCHET MECHANISM
MECANISME A GALETS DE SERRAGE

(30) Priorität: 27.11.1998 DE 19854945
(43) Veröffentlichungstag der Anmeldung: 19.09.2001
(73) Patentinhaber: INA Wälzlager Schaeffler oHG, 91074 Herzogenaurach (DE)
(72) Erfinder: HOCHMUTH, Harald, D-91469 Hagenbüchach (DE)
(86) Internationale Anmeldenummer: EP9908525
(87) Internationale Veröffentlichungsnummer: WO0032956

(56) Entgegenhaltungen:
- EP-A- 0 631 901
- DE-U- 9 408 426
- US-A- 2 273 646
- US-A- 3 302 760

## Beschreibung

Die vorliegende Erfindung betrifft ein Klemmrollenschaltwerk, das zu den stufenlos arbeitenden Schnittschaltwerken zählt. Ein Antriebselement und ein Abtriebselement begrenzen gemeinsam mit einander zugewandten Klemmflächen sich in entgegengesetzten Richtungen verjüngende, keilförmige Klemmspalten, in denen Klemmrollen angeordnet sind. Gestellfeste Anschläge sind vorgesehen, die - wenn das Antriebselement des Klemmrollenschaltwerks nicht betätigt wird - die Klemmrollen außer Klemmeingriff mit den Klemmflächen halten. Auf diese Weise ist sichergestellt, daß das Abtriebselement in einer ruhenden bzw. in einer Ausgangsstellung des Antriebselementes drehbar ist. Wird das Antriebselement aus seiner Ausgangsstellung bzw. aus seiner Ruhelage ausgelenkt, verrichtet das Antriebselement einen Arbeitshub. Die Rückbewegung des Antriebselementes in die Ausgangsstellung ist ein Leerhub, bei dem das Abtriebselement nicht betätigt wird. Beim Arbeitshub des Antriebselementes in der einen Richtung werden die einen Klemmrollen in Klemmeingriff mit den Klemmflächen gebracht, wobei die jeweils anderen Klemmrollen gestellfest abgestützt und außer Klemmeingriff mit den Klemmflächen bleiben. Während des Leerhubs sind die zuvor eingeklemmten Klemmrollen wegen der Bewegungsumkehr außer Klemmeingriff mit den Klemmflächen, die anderen Klemmrollen bleiben auch während des Leerhubs an dem gestellfesten Anschlag abgestützt und außer Klemmeingriff mit den Klemmflächen. Deshalb erfolgt keine Mitnahme des Abtriebselementes während des Leerhubs.

Es wird auf die europäische Patentanmeldung 99972984.1 (WO 00/32440) des Anmelders verweisen.

### Hintergrund der Erfindung

Ein derartiges Klemmrollenschaltwerk ist beispielsweise aus der EP 0 631 901 B1 bekannt geworden. Hier ist eine Verstellvorrichtung insbesondere zur Verstellung eines Kraftfahrzeugsitzes offenbart, wobei ein Klemmrollenschaltwerk (Figuren 2 und 3 der EP 0 631 901 B1) und ein Klemmrollengesperre (Figur 13 der EP 0 631 901 B1) miteinander gekoppelt sind. Figur 2 der EP 0 631 190 B1 zeigt das Klemmrollengesperre in einer Ausgangsstellung, in der der Schwenkhebel nicht betätigt wird, und Figur 3 der EP 0 631 901 B1 zeigt den in einer Richtung ausgelenkten Schwenkhebel am Ende seines Arbeitshubs. Bei diesem Klemmrollenschaltwerk ist ein Innenteil vorgesehen, das in eine Öffnung des Schwenkhebels eingreift. In dem von dem Schwenkhebel und dem Innenteil begrenzten ringförmigen Raum sind die Klemmrollen angeordnet. Durch eine entsprechende Gestaltung der Ausnehmung ist der Ringraum an mehreren über den Umfang verteilt angeordneten Abschnitten radial eingeschnürt. In diesen Abschnitten ist der lichte Abstand zwischen der zylindrischen Mantelfläche des Innenteils und der Wand der Ausnehmung kleiner als der Durchmesser der Klemmrollen. Auf diese Weise sind keilförmige Klemmspalte gebildet, in die die Klemmrollen mittels Druckfedern hineingefedert sind. Zwischen zwei einander benachbarten Klemmrollen sind gestellfeste Anschläge vorgesehen, gegen die die Klemmrollen angedrückt sind. Die Keilspitzen der keilförmigen Klemmspalten der beiden Klemmrollen sind einander zugewandt. Die gestellfesten Anschläge sind so bemessen, daß die Klemmrollen außer Klemmeingriff mit ihren Klemmflächen sind. Wird nun - wie in Figur 3 der EP 0 631 901 B1 gezeigt - der Schwenkhebel im Uhrzeigersinn aus seiner Ausgangsstellung ausgelenkt, werden diejenigen Klemmrollen in ihre Klemmspalte hineingezogen, deren Keilspitzen entgegengesetzt dem Uhrzeigersinn gerichtet sind. Nun erfolgt eine Mitnahme des Innenteils. Während dieser Mitnahme werden die zwischen je zwei Klemmrollen angeordneten Druckfedern komprimiert, bis die Federwindungen schließlich auf Block anliegen. In der Blocklage der Druckfedem ist der Arbeitshub des Schwenkhebels beendet. Während des Arbeitshubes bleiben die jeweils anderen Klemmrollen an den gestellfesten Anschlägen abgestützt, wobei sowohl das Innenteil als auch der Schwenkhebel an diesen gestellfest abgestützten Klemmrollen vorbei bewegt werden. Bei dieser Anordnung kann es nachteilig sein, daß die während des Arbeitshubes gestellfest abgestützten Klemmrollen beispielsweise aufgrund der Federkraft entweder gegen die Wand der Ausnehmung oder gegen die Mantelfläche des Innenteils angedrückt werden. Dieser Reibkontakt ist deswegen nachteilig, weil dadurch der Kraftaufwand zur Durchführung des Arbeitshubes u. U. erheblich vergrößert wird. Wenn ein derartiges Klemmrollenschaltwerk beispielsweise in einer Sitzhöhenverstellung eines Kraftfahrzeugsitzes eingesetzt wird, ist es jedoch wünschenswert, wenn die Betätigung der Sitzhöhenverstellung möglichst leichtgängig ist. Bei dieser bekannten Anordnung kann weiterhin nachteilig sein, daß die während des Arbeitshubes gestellfest abgestützten Klemmrollen zwangsweise ihrer Klemmspalten verlassen müssen. Das bedeutet jedoch, daß im Anschluß an die Klemmspalten Führungen für diese Klemmrollen geschaffen sein müssen.

### Zusammenfassung der Erfindung

Aufgabe der vorliegenden Erfindung ist es daher, ein Klemmrollenschaltwerk nach dem Oberbegriff des Anspruchs 1 anzugeben, bei dem die während des Arbeitshubes gestellfest abgestützten Klemmrollen in ihren Klemmspalten bleiben. Erfindungsgemäß wird diese Aufgabe dadurch gelöst, daß das Antriebselement zwei in entgegengesetzten Richtungen drehbare Antriebsteile umfaßt, die in der Ausgangsstellung des Antriebselementes beide gestellfest abgestützt sind, wobei der Schwenkhebel in der einen ausgelenkten Richtung das eine Antriebsteil und in der entgegengesetzten, ausgelenkten Richtung das andere Antriebsteil formschlüssig mitnimmt. Erfindungsgemäß bleiben also die während des Arbeitshubes gestellfest abgestützten Klemmrollen gemeinsam mit ihrem Antriebsteil gestellfest abgestützt. Das bedeutet, daß die freigeschalteten Klemmrollen ihren Klemmspalt nicht verlassen. Der Klemmspalt kann derart bemessen sein, daß die gestellfest abgestützen Klemmrollen außer Kontakt mit dem Abtriebselement bleiben, das während des Arbeitshubes gedreht wird. In vorteilhafter Weise können in den Klemmspalten Druckfedern angeordnet sein, die einerseits an dem Antriebsteil und die andererseits an der Klemmrolle abgestützt sind, wobei unter der Federkraft dieser Federn die Klemmrollen gegen den ersten gestellfesten Anschlag angedrückt werden. Weiterhin kann es vorteilhaft sein, wenn der erste gestellfeste Anschlag mit einer an die Mantelfläche der Klemmrollen angepaßten konkaven Kontur versehen ist, so daß die Klemmrollen an dieser konkaven Kontur einwandfrei gehalten sind. In der Ausgangsstellung des Klemmrollenschaltwerks sind demzufolge die Klemmrollen zwischen diesen Federn und den ersten gestellfesten Anschlägen eingespannt. Unerwünschte Klappergeräusche sind auf diese Weise einwandfrei ausgeschlossen.

Beide Antriebsteile sind jeweils mit wenigstens einer die eine Klemmfläche bildenden Klemmrampe versehen, wobei die von den Klemmrampen des einen Antriebsteiles begrenzten keilförmigen Klemmspalten sich in der einen Richtung verjüngen, und wobei die von den Klemmrampen des anderen Antriebsteiles begrenzten Klemmspalten sich in der entgegengesetzten Richtung verjüngen. Auf diese Weise ist sichergestellt, daß eine Mitnahme des Abtriebselementes in beiden Drehrichtungen möglich ist. Vorzugsweise sind zwei einander benachbarte, je von einem der beiden Antriebsteile begrenzte keilförmige Klemmspalte mit ihren verjüngten Enden einander zugewandt, wobei der erste gestellfeste Anschlag zwischen die beiden keilförmigen Klemmspalte eingreift und in der ruhenden Ausgangsstellung des Antriebselementes die in den beiden keilförmigen Klemmspalten angeordneten Klemmrollen außer Klemmeingriff hält. Der erste gestellfeste Anschlag kann beispielsweise durch an einem Gehäuse befestigte Zungen gebildet sein.

Vorzugsweise umfaßt das Antriebselement eine drehfest mit dem Schwenkhebel verbundene Schaltscheibe, die in der einen Richtung das eine Antriebsteil und die in der anderen Richtung das andere Antriebsteil mitnimmt. Beispielsweise kann die Schaltscheibe Langlöcher aufweisen, in die an den Antriebsteilen befestigte Stifte eingreifen. In der Ausgangsstellung des Schwenkhebels liegen die Stifte des einen Antriebsteiles an einem Ende der Langlöcher und die Stifte des anderen Antriebsteiles an einem entgegengesetzten Ende der Langlöcher an. In ein Langloch greift jeweils ein Stift ein. Wird der Schwenkhebel ausgelenkt, erfolgt je nach Drehrichtung, die formschlüssige Mitnahme eines der beiden Antriebsteile.

Eine besonders vorteilhafte erfindungsgemäße Weiterbildung sieht vor, daß in der ruhenden Ausgangsstellung des Antriebselementes das eine Antriebsteil unter Federkraft an einem zweiten gestellfesten Anschlag und das andere Antriebsteil unter Federkraft an einem dritten gestellfesten Anschlag angedrückt sind. Auf diese Weise sind beispielsweise unerwünschte Klappergeräusche der Antriebsteile ausgeschaltet. Diese weiteren gestellfesten Anschläge können beispielsweise dadurch gebildet sein, daß die erwähnten Stifte der Antriebsteile in Langlöcher des Gehäuses eingreifen. In der Ausgangsstellung des Schwenkhebels liegen die Stifte des einen Antriebsteiles an einem Ende der Langlöcher und die Stifte des anderen Antriebsteiles an einem entgegengesetzten Ende der Langlöcher an. In ein Langloch greift jeweils ein Stift ein. Weiterhin kann die Federkraft dazu benutzt werden, daß die beiden Antriebsteile jeweils aus einer ausgelenkten Position unter der Wirkung der Federkraft in ihre Ausgangsposition hineingefedert werden. Das bedeutet, daß ein Schwenken des Schwenkhebels entgegen dieser Federkraft erfolgt, wobei ein Loslassen des Schwenkhebels zur Folge hat, daß der Schwenkhebel unter dieser Federkraft in seine Ausgangsstellung hineingefedert wird.

Die beiden Antriebsteile können um eine gemeinsame Drehachse schwenkbar und axial hintereinander angeordnet sein. Bei dieser Anordnung bietet sich an, daß die beiden Antriebsteile jeweils mehrere über den Umfang verteilt angeordnete, radial vorspringende Finger aufweisen, wobei wenigstens ein Finger des einen Antriebsteils und wenigstens ein Finger des anderen Antriebsteils zwischen zwei umfangsseitig einander benachbarte Finger des jeweils anderen Antriebsteils mit Schaltspiel in Umfangsrichtung eingreifen. Das Schaltspiel ist so bemessen, daß der Schwenkwinkel zwischen diesen ineinander greifenden Fingern gerade dem maximalen Arbeitshub des Schwenkhebels entspricht. Bei dieser Anordnung lassen sich die ineinander greifenden Finger problemlos derart gestalten, daß der Finger des um einen Schalthub ausgelenkten Antriebsteiles gegen einen benachbarten Finger des anderen - an seinem gestellfesten Anschlag abgestützten - Antriebsteiles anschlägt. Anders als im oben beschriebenen Stand der Technik wird hier das Ende des Arbeitshubes nicht durch eine Blocklage von Federn bestimmt, sondern durch formschlüssige Anschläge, ohne daß die Gefahr der Beschädigung einer Feder besteht.

Bei dieser erfindungsgemäßen Weiterbildung ist es vorteilhaft, wenn zwischen zwei einander benachbarten, ineinander greifenden Fingern jeweils eine Druckfeder angeordnet ist, die mit ihrem einen Ende an dem einen Finger und die mit ihrem anderen Ende an dem anderen Finger abgestützt ist. Diese Druckfedern federn die beiden Antriebsteile gegen die zugeordneten zweiten und dritten gestellfesten Anschläge an. Zwar kann schon die Federkraft einer Druckfeder hinreichend sein, jedoch mag es in manchen Fällen zweckmäßig sein, wenn mehrere Federn jeweils zwischen zwei ineinander greifenden Klauen angeordnet sind. Auf diese Weise erhöht sich die Gesamffederkraft um die Federkraft der jeweils hinzugefügten Feder.

Eine weitere erfindungsgemäße Weiterbildung sieht vor, daß das Abtriebselement ein ringförmiges Abtriebsteil aufweist, an dessen Innenumfang eine zylindrische Klemmbahn ausgebildet ist. Bei dieser Anordnung können die beschriebenen Finger der beiden Antriebsteile mit den Klemmrampen versehen sein, die gemeinsam mit der zylindrischen Klemmbahn des ringförmigen Abtriebsteils die keilförmigen Klemmspalten begrenzen.

Eine weitere erfindungsgemäße Weiterbildung sieht vor, daß das Klemmrollenschaltwerk in einem gestellfesten Gehäuse angeordnet ist, wobei das Abtriebsteil mittels eines Radiallagers in dem Gehäuse gelagert ist. Das Gehäuse übernimmt demzufolge zum einen die Funktion, das Klemmrollenschaltwerk gegen das Eindringen von unerwünschten Fremdstoffen zu schützen; außerdem dient es der beschriebenen radialen Lagerung. Ein besonders einfaches Radiallager kann dadurch gebildet sein, daß das Abtriebsteil umfangsseitig mit einer Gleitlagerfläche versehen ist, die an der als Gleitlagerfläche ausgebildeten Innenwand des Gehäuses radial gelagert ist.

An den Fingern der Antriebsteile können Gleitlagerflächen ausgebildet sein, die mit einer am Innenumfang des Abtriebsteiles ausgebildeten Gleitlagerfläche im Gleitkontakt stehen. Auf diese einfache Weise kann das Antriebsteil gegenüber dem Abtriebsteil radial gelagert und zentriert sein.

Die Gleitlager dienen vornehmlich der Zentrierung. Die Gleitlagerflächen können daher auch als Zentrierflächen bezeichnet werden, die für einen Gleitkontakt geeignet sind. Auch die Mantelfläche beispielsweise eines Zylinders, der an einer anderen Mantelfläche linienförmig anliegt, kann hier als Zentrierfläche aufgefaßt werden.

### Kurze Beschreibung der Zeichnungen

Nachstehend wird die Erfindung anhand von zwei in insgesamt sieben Figuren dargestellten Ausführungsbeispielen näher erläutert. Es zeigen:
- Figur 1: einen Längsschnitt durch eine Stelleinrichtung mit einem erfindungsgemäßen Klemmrollenschaltwerk,
- Figur 2: einen Querschnitt durch die Stelleinrichtung aus Figur 1 entlang der Linie II-II,
- Figur 3: ein Antriebsteil in einer Ansicht,
- Figur 4: einen weiteren Querschnitt durch die Stelleinrichtung aus Figur 1 entlang der Linie IV-IV,
- Figur 5: einen Querschnitt durch eine weitere Stelleinrichtung,
- Figur 6: die Stelleinrichtung aus Figur 5, jedoch mit dem Schwenkhebel in Ausgangsstellung und
- Figur 7: die Stelleinrichtung in der Darstellung gemäß Figur 6, jedoch mit ausgelenktem Schwenkhebel.

### Ausführliche Beschreibung der Zeichnungen

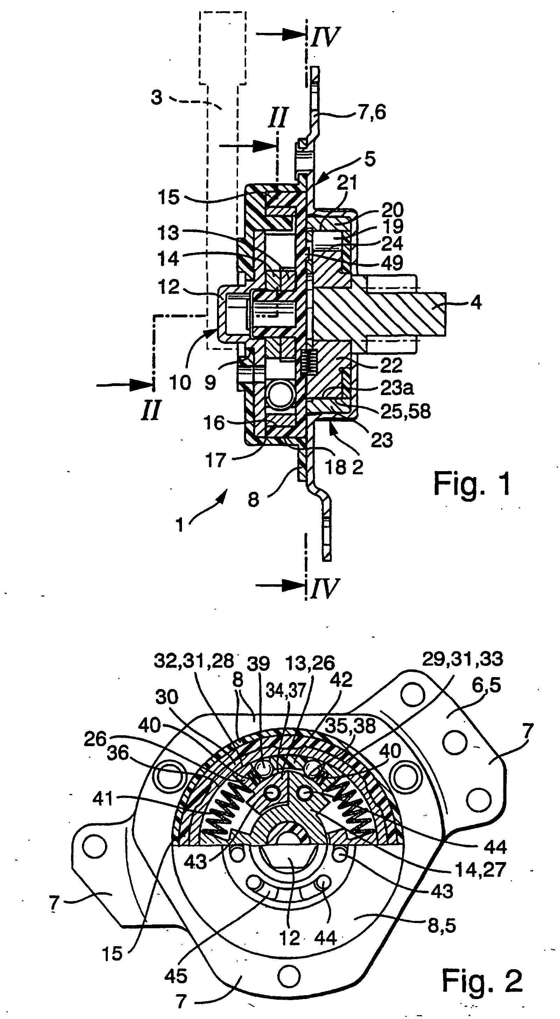

Figur 1 zeigt eine Stelleinrichtung zur Verstellung eines Sitzes eines Kraftfahrzeugs. Ein erfindungsgemäßes Klemmrollenschaltwerk 1 und ein schaltbares Klemmrollengesperre 2 sind derart miteinander gekoppelt, daß eine von einem Schwenkhebel 3 durchgeführte Schwenkbewegung über das Klemmrollenschaltwerk 1 auf eine Abtriebswelle 4 des schaltbaren Klemmrollengesperres 2 übertragen wird. Das erfindungsgemäße Klemmrollenschaltwerk 1 und das schaltbare Klemmrollengesperre 2 sind in einem gemeinsamen Gehäuse 5 angeordnet. Das Gehäuse 5 besteht im wesentlichen aus einem Gehäuseboden 6 mit Anschraubflanschen 7 und aus einem Gehäusedeckel 8, der im vorliegenden Ausführungsbeispiel aus Kunststoff gebildet ist. Der Gehäusedeckel 8 ist mit einer Öffnung 9 für ein Antriebselement 10 des erfindungsgemäßen Klemmrollenschaltwerks 1 versehen. Der Gehäuseboden 6 ist mit einer weiteren Öffnung 11 für die Abtriebswelle 4 des schaltbaren Klemmrollengesperres 2 versehen.

Das Antriebselement 10 umfaßt eine Schaltscheibe 12, die drehfest mit dem Schwenkhebel 3 verbunden ist. Weiterhin umfaßt das Antriebselement 10 zwei Antriebsteile 13, 14, die mit der Schaltscheibe 12 zur Durchführung einer Schwenkbewegung verbunden sind. Weiterhin ist das Antriebselement 10 mit einem Kupplungsring 15 versehen, der das Klemmrollenschaltwerk 1 und das schaltbare Klemmrollengesperre 2 zur Übertragung einer Schwenkbewegung miteinander verbindet. Eine zylindrische Innenwand des Gehäusedeckels 8 und eine zylindrische:Mantelfläche des Kupplungsrings 15 sind als Gleitlagerflächen 16, 17 ausgebildet, die miteinander in Gleitkontakt stehen. Auf diese Weise ist ein Radiallager 18 gebildet, wobei das Kupplungsteil 15 radial an dem Gehäuse 5 gelagert ist und wobei das Radiallager 18 ein Kippen des Kupplungsteils 15 verhindert. Die Drehachse des Radiallagers 18 fällt zusammen mit der Drehachse der beiden Antriebsteile 13, 14, der Schaltscheibe 12, des Schwenkhebels 3 und auch der Abtriebswelle 4 des schaltbaren Klemmrollengesperres 2.

Zwischen der Abtriebswelle 4 des Klemmrollengesperres 2 und dem Gehäuse 5 sind Klemmrollen 19 angeordnet. Ein Klemmring 20 ist drehfest mit dem Gehäuse 5 verbunden, wobei dessen innere Mantelfläche eine zylindrische Klemmbahn 21 für die Klemmrollen 19 bildet. Die Abtriebswelle 4 ist mit mehreren über den Umfang verteilt angeordneten Nocken 22 versehen, deren Umfangsflächen als Gleitflächen 23 ausgebildet sind, wobei diese Gleitlagerflächen 23 mit der als Gleitlagerfläche 23a ausgebildeten inneren Mantelfläche des Klemmrings 20 stehen. Weiterhin ist die Abtriebswelle 4 mit mehreren über den Umfang verteilt angeordneten Klemmrampen 24 versehen, die gemeinsam mit der zylindrischen Klemmbahn 21 des Klemmrings 20 keilförmige Klemmspalten begrenzen, in die die Klemmrollen 19 hineingefedert sind. Das von den Gleitlagerflächen 23 der Nocken 22 einerseits und der Gleitlagerfläche 23a des Klemmrings 20 andererseits gebildete Radiallager 25 sorgt dafür, daß die Abtriebswelle 4 gegenüber dem Gehäuse 5 radial gelagert ist, wobei das Radiallager 25 derart beschaffen ist, daß ein Verkippen der Abtriebswelle 4 ausgeschlossen ist. Die innere Mantelfläche des Klemmrings 20 dient sowohl als Gleitlagerfläche 21 als Klemmbahn.

Figur 2 zeigt einen Querschnitt entlang des markierten Verlaufs II-II. Hier sind deutlich die beiden axial hintereinander angeordneten Antriebsteile 13, 14 zu erkennen. Jedes der beiden Antriebsteile 13, 14 weist drei gleichmäßig über den Umfang verteilt angeordnete Finger 26, 27 auf, wobei die Finger 26, 27 mit Schaltspiel in Umfangsrichtung ineinandergreifen. Die beiden Antriebsteile 13, 14 sind so weit gegeneinander drehbar, bis die ineinander greifenden Finger 26, 27 gegeneinander schlagen. Die Antriebsteile 13, 14 sind jeweils über ein Radiallager 28, 29 an dem Kupplungsring 15 radial gelagert und zentriert. Zu diesem Zweck ist ein Ring 30 drehfest mit dem Kupplungsring 15 verbunden, wobei dessen innere Mantelfläche eine Gleitlagerfläche 31 bildet. Weiterhin sind die Umfangsflächen der Finger 26, 27 jeweils mit Gleitlagerflächen 32, 33 versehen, die mit der Gleitlagerfläche 31 des Rings 30 im Gleitkontakt stehen. Einander benachbarte Finger 26, 27 der beiden Antriebsteile 13, 14 sind jeweils mit Klemmrampen 34, 35 versehen, die gemeinsam mit der als zylindrische Klemmbahn 36 ausgebildeten inneren Mantelfläche des Rings 30 keilförmige Klemmspalten 37, 38 begrenzen, in denen Klemmrollen 39 angeordnet sind. Die Klemmrollen 39 sind mittels Druckfedern 40 in ihre keilförmigen Klemmspalte 37, 38 hineingefedert. Die Druckfedern 40 sind einerseits an den Fingern 26, 27 und andererseits an den Klemmrollen 40 abgestützt. Weitere Druckfedern 41 sind zwischen einander benachbarten Fingern 26, 27 der beiden Antriebsteile 13, 14 angeordnet. Jede Druckfeder 41 ist einerseits an dem einen Finger 26 und andererseits an dem anderen Finger 27 abgestützt.

Zwischen zwei einander benachbarten Klemmrollen 39 greifen fest mit dem Gehäusedeckel 8 verbundene Zungen 42 ein, an denen die Klemmrollen 39 abgestützt sind. Die Zungen 42 sind derart bemessen, daß in der gezeigten Darstellung die Klemmrollen 39 außer Klemmeingriff mit dem Klemmrampen 34, 35 und der zylindrischen Klemmbahn 36 sind. Die Zungen 42 bilden gestellfeste erste Anschläge.

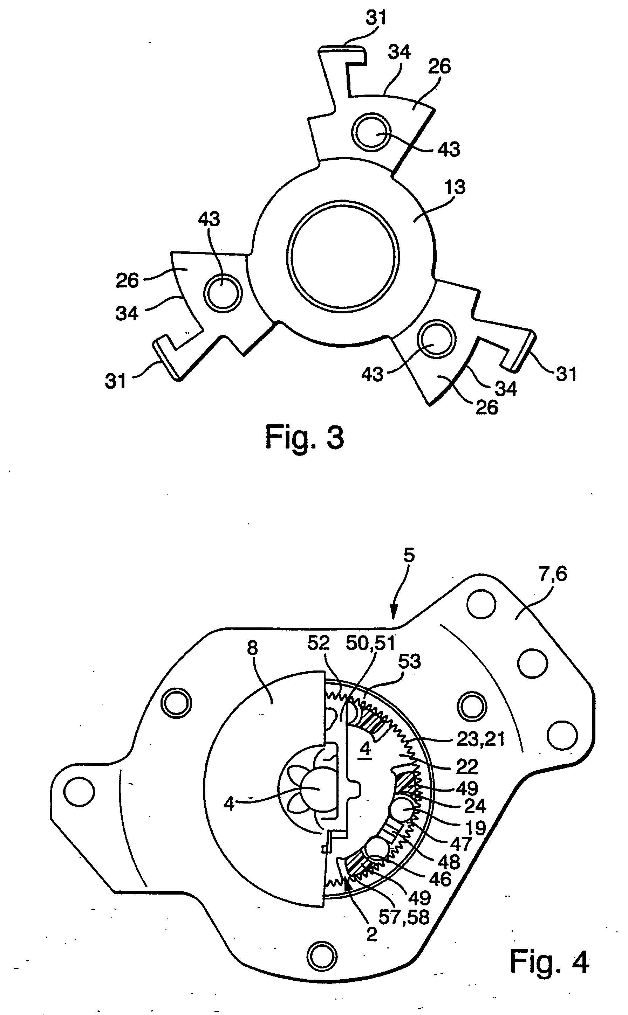

Jedes der beiden Antriebsteile 13,14 ist fest mit Stiften 43, 44 verbunden, die stirnseitig vorstehen und die in Langlöcher 45 des Gehäusedeckels 8 eingreifen. Außerdem greifen diese Stifte 43, 44 in Langlöcher der Schaltscheibe 12 ein, wie weiter unten näher erläutert wird. Figur 3 zeigt das Antriebsteil 13 als Einzelheit.

Figur 4 zeigt einen Halbschnitt entlang der Linie 111-111 aus Figur 1. Hier ist deutlich das schaltbare Klemmrollengesperre 2 zu erkennen. Die Klemmrollen 19 sind in ihre von den Klemmrampen 24 und der zylindrischen Klemmbahn 21 begrenzten keilförmigen Klemmspalte 46, 47 mittels Druckfedern 48 hineingefedert. Fest mit dem Kupplungsring 15 verbundene Klauen 49 greifen zwischen die Klemmrollen 19 ein.

Weiterhin ist eine Rutschsicherung 50 vorgesehen, die einen drehfest, aber radial beweglich mit der Abtriebswelle 4 verbundenen Schieber 51 aufweist, dessen Zähne 52 mit einem Zahnkranz 53 des Gehäuses 5 in Eingriff gebracht werden können.

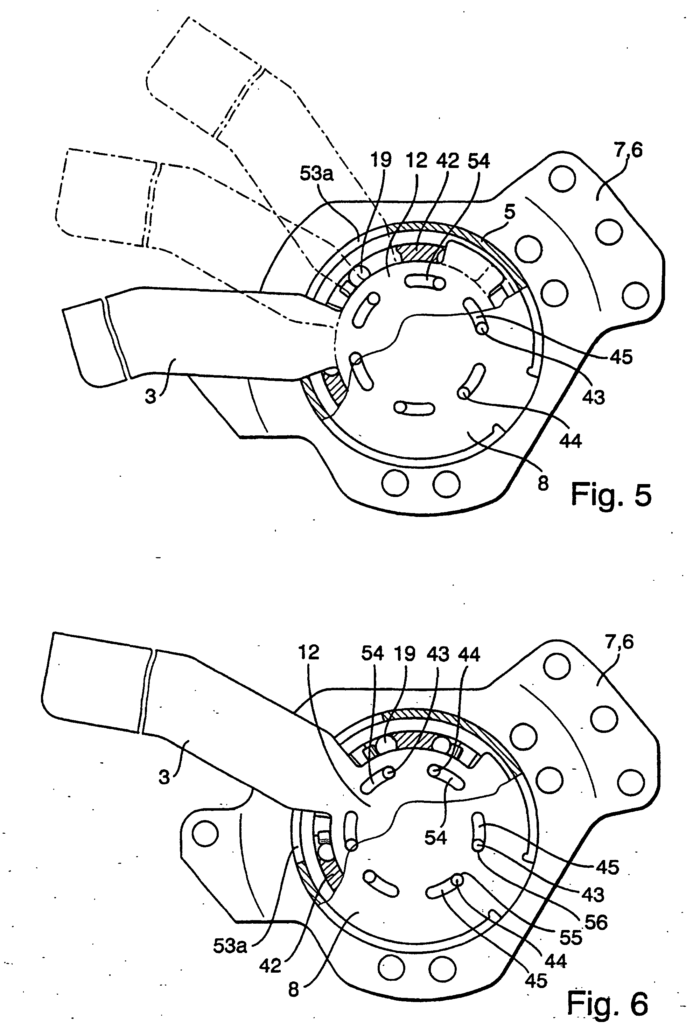

Figur 5 zeigt eine weitere Stelleinrichtung, die sich von der oben beschriebenen Stelleinrichtung im wesentlichen dadurch unterscheidet, daß der Schwenkhebel 3 einstückig mit der Schaltscheibe 12 verbunden ist, wobei der Schwenkhebel 3 durch einen Schlitz 53a des Gehäuses 5 radial hindurchgeführt ist. Der Gehäusedeckel 8 ist teilweise aufgebrochen, so daß die Schaltscheibe 12 mit den Langlöchern 54 deutlich zu erkennen ist. In dieser Darstellung sind deutlich die in der Schaltscheibe 12 vorgesehenen Langlöcher 54 dargestellt, in die die Stifte 43, 44 eingreifen.

In dieser Figur 5 sind drei Positionen des Schwenkhebels 3 dargestellt. Gestrichelt dargestellt ist die mittlere, die Ausgangsposition des Schwenkhebels 3. Von dort aus kann der Schwenkhebel 3 im Uhrzeigersinn und entgegen dem Uhrzeigersinn ausgelenkt werden. Ein Auslenken des Schwenkhebels 3 aus der Ausgangsstellung bewirkt einen Arbeitshub und eine Rückstellbewegung in die Ausgangsstellung bewirkt einen Leerhub. Während des Arbeitshubes wird die über die Betätigung des Schwenkhebels 3 aufgebrachte Leistung in die Abtriebswelle 4 des Klemmrollengesperres 2 weitergeleitet.

Im folgenden soll erläutert werden, auf welche Weise diese Leistungsübertragung mit dem erfindungsgemäßen Klemmrollenschaltwerk erfolgt. Zur Erläuterung werden die Figuren 2, 5, 6 und 7 herangezogen. Figur 6 zeigt die erfindungsgemäße Sitzverstellung aus Figur 5, jedoch mit dem Schwenkhebel 3 in seiner Ausgangsstellung. Unter der Wirkung der weiter oben beschriebenen Druckfedern 41 werden die Stifte 43, 44 der beiden Antriebsteile 13, 14 gegen gestellfeste Anschläge angefedert. Die Stifte 44 werden entgegen dem Uhrzeigersinn gegen das Ende der Langlöcher 45 angefedert, so daß dieses Ende einen zweiten gestellfesten Anschlag 55 bildet. Die Stifte 43 des Antriebsteiles 13 sind im Uhrzeigersinn gegen die anderen Enden der Langlöcher 45 angefedert, so daß diese Enden dritte gestellfeste Anschläge 56 bilden. In jedes Langloch 45 greift entweder ein Stift 43 des Antriebsteiles 13 oder ein Stift 44 des Antriebsteiles 14 ein.

Die in der Schaltscheibe 12 vorgesehenen Langlöcher 54 sind so bemessen, daß in der Ausgangsstellung des Schwenkhebels 3 die Stifte 43, 44 ebenfalls an Enden der Langlöcher 54 anliegen. Auf diese Weise ist die Ausgangsstellung des Schwenkhebels 3 eindeutig festgelegt. Die Langlöcher 45, 54 der Schaltscheibe 12 und des Gehäusedeckels 8 liegen hier deckungsgleich übereinander.

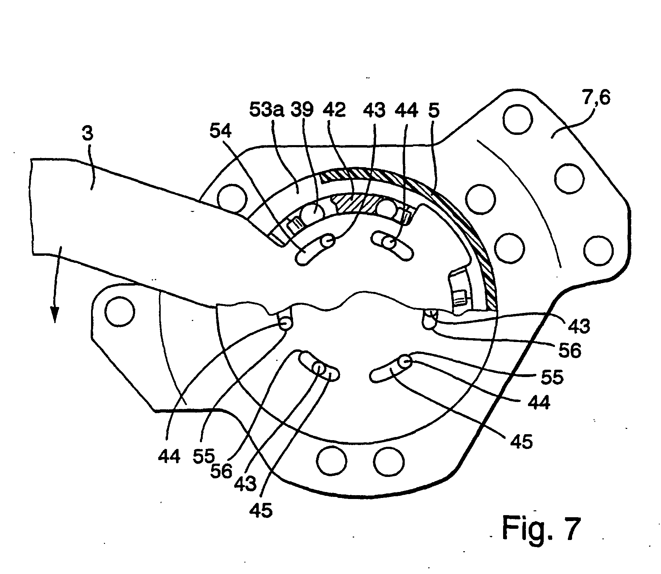

Figur 7 zeigt die Stelleinrichtung aus Figur 6, jedoch ist der Schwenkhebel 3 aus seiner Ausgangsstellung heraus entgegen dem Uhrzeigersinn ausgelenkt worden, wobei das Ende dieses Arbeitshubes noch nicht erreicht ist. Der Figur ist deutlich zu entnehmen, daß der Schwenkhebel 3 die Stifte 43 formschlüssig mitnimmt, da diese jeweils an dem Ende des Langlochs 54 der Schaltscheibe 12 anliegen. Das bedeutet, daß das Antriebsteil 13 ebenfalls formschlüssig mitgenommen wird. Da nun eine Relativbewegung zwischen dem Antriebsteil 13 und dem Kupplungsring 15 stattfindet, werden die Klemmrollen 39 des Klemmrollenschaltwerks 1 in ihre keilförmigen Klemmspalte 37 hineingezogen. Aus diesem Grund schwenkt also der Kupplungsring 15 gemeinsam mit dem Antriebsteil 13 und dem Schwenkhebel 3. Unter der Drehung des Kupplungsrings 15 schlagen dessen Klauen 49 zunächst gegen die Klemmrollen 19 des schaltbaren Klemmrollengesperres 2 und bringen die betreffenden Klemmrollen 19 außer Klemmeingriff. Im Anschluß daran schlagen die Klauen 49 an nicht weiter dargestellte Anschläge der Abtriebswelle 4, so daß die Abtriebswelle 4 formschlüssig mitgedreht wird.

Während dieses Arbeitshubes bleiben die Stifte 44 bzw. das Antriebsteil 14 gestellfest an den zweiten Anschlägen 55 abgestützt. Unter diesem Arbeitshub werden die Druckfedern 41 komprimiert, da das Antriebsteil 13 gegenüber dem gestellfest abgestützten Antriebsteil 14 verschwenkt wird. Das Ende des Arbeitshubes (Figur 7) ist erreicht, wenn die Finger 27 des Antriebsteiles 13 gegen die Finger 27 des Antriebsteiles 14 anschlagen. Am Ende des Arbeitshubes sind die Druckfedem 41 noch nicht auf Block zusammengedrückt.

Während des Arbeitshubes bleiben die dem gestellfest abgestützten Antriebsteil 14 zugeordneten Klemmrollen 39 in ihren keilförmigen Klemmspalten 38 und sind einerseits an den gestellfesten Zungen 42 und andererseits an den Druckfedem 40 abgestützt. Die gestellfesten Zungen 42 sind so bemessen, daß die Klemmrollen 39 außer Klemmeingriff bleiben.

Wird der Schwenkhebel 3 nun losgelassen, federt dieser unter Federkraft der komprimierten Druckfedern 41 zurück in seine Ausgangsstellung. Die Druckfedern 41 entspannen soweit, bis die Stifte 43 des Antriebsteils 13 wieder an ihren gestellfesten dritten Anschlägen 56 anschlagen. Unter diesem Leerhub findet keine Drehbewegung des Kupplungsrings 15 statt. Denn die zuvor eingeklemmten Klemmrollen 39 werden aufgrund der Relativbewegung zwischen dem Antriebsteil 13 und dem Kupplungsring 15 in ihre keilförmigen Klemmspalte 37 hineingedrückt, so daß ein Klemmeingriff unmöglich ist. Ein erneutes Auslenken des Schwenkhebels 3 entgegengesetzt dem Uhrzeigersinn bewirkt ein weiteres Verdrehen des Kupplungsrings 15 und damit der Abtriebswelle 4. Für die Funktion der erfindungsgemäßen Stelleinrichtung ist es nicht erforderlich, den Arbeitshub vollständig auszuführen. Beispielsweise kann der Schwenkhebel 3 nur um die Hälfte seines möglichen Arbeitshubes ausgelenkt werden. Dementsprechend reduziert findet eine Mitnahme des Kupplungsrings 15 und der Abtriebswelle 4 statt. Wird aus dieser Zwischenstellung der Schwenkhebel 3 losgelassen, federt dieser wiederum unter der Federkraft der Druckfedern 41 zurück in seine Ausgangsstellung.

Ein Drehen der Abtriebswelle 4 in die entgegengesetzte Richtung ist möglich, wenn der Schwenkhebel 3 aus seiner Ausgangsstellung im Uhrzeigersinn betätigt wird. Die Leitungsübertragung erfolgt in der gleichen zuvor beschriebenen Weise.

In der Ausgangsstellung des Schwenkhebels 3 wird ein von außen in die Abtriebswelle 4 eingeleitetes Drehmoment über die jeweils eingeklemmten Klemmrollen 19 in das Gehäuse 5 eingeleitet.

Um zu vermeiden, daß die eingeklemmten Klemmrollen 19 des Klemmrollengesperres 2 unter dem Einfluß von Vibrationen kurzzeitig den Klemmeingriff lokkern und somit eine Relativdrehung zwischen dem Gehäuse 5 und der Abtriebswelle 4 auslösen könnten, ist die oben bereits erwähnte Rutschsicherung 50 vorgesehen. Wenn der Schwenkhebel 3 in seiner Ausgangsposition ist, greifen die Zähne 52 des Schiebers 51 in den Zahnkranz 53 ein. Somit besteht eine formschlüssige Verbindung zwischen der Abtriebswelle 4 und dem Gehäuse 5. Wird der Schwenkhebel 3 betätigt, wird der Schieber 51 über einen Schaltmechanismus radial einwärts bewegt, so daß die Zähne 52 außer Eingriff mit dem Zahnkranz 53 sind.

Die beschriebenen Radiallager dienen auch der Zentrierung der gelagerten Teile zueinander. Die Stifte 43, 44 und die Langlöcher 54 der Schaltscheibe 12 können derart aufeinander abgestimmt sein, daß die Schaltscheibe 12 über die Stifte 43, 44 einwandfrei zentriert ist.

Die Klauen 49 des Kupplungsringes 15 liegen mit ihren äußeren Mantelflächen an der gehäusefesten zylindrischen Klemmbahn 21 des Klemmrollengesperre 2 an (Figur 4); auf diese Weise ist sichergestellt, daß die Klauen 49 einwandfrei zentriert sind und somit einwandfrei zu den Klemmrollen ausgerichtet sind. Da die Mantelflächen der Klauen 49 an der zylindrischen Klemmbahn 21 entlanggleiten, bilden diese Mantelflächen Gleitlagerflächen 57, die zusammen mit der zylindrischen Klemmbahn 21 ein Radiallager 58 bilden.

### Bezugszahlenliste

- 1: Klemmrollenschaltwerk
- 2: schaltbares Klemmrollengesperre
- 3: Schwenkhebel
- 4: Abtriebswelle
- 5: Gehäuse
- 6: Gehäuseboden
- 7: Anschraubflansch
- 8: Gehäusedeckel
- 9: Öffnung
- 10: Antriebselement
- 11: Öffnung
- 12: Schaltscheibe
- 13: Antriebsteil
- 14: Antriebsteil
- 15: Kupplungsring
- 16: Gleitlagerfläche
- 17: Gleitlagerfläche
- 18: Radiallager
- 19: Klemmrolle
- 20: Klemmring
- 21: zylindrische Klemmbahn
- 22: Nocke
- 23: Gleitlagerfläche
- 23a: Gleitlagerfläche
- 24: Klemmrampe
- 25: Radiallager
- 26: Finger
- 27: Finger
- 28: Radiallager
- 29: Radiallager
- 30: Ring
- 31: Gleitlagerfläche
- 32: Gleitlagerfläche
- 33: Gleitlagerfläche
- 34: Klemmrampe
- 35: Klemmrampe
- 36: zylindrische Klemmbahn
- 37: Klemmspalt
- 38: Klemmspalt
- 39: Klemmrolle
- 40: Druckfeder
- 41: Druckfeder
- 42: Zunge
- 43: Stift
- 44: Stift
- 45: Langloch
- 46: Klemmspalt
- 47: Klemmspalt
- 48: Druckfeder
- 49: Klaue
- 50: Rutschsicherung
- 51: Schieber
- 52: Zahn
- 53: Zahnkranz
- 53a: Schlitz
- 54: Langloch
- 55: zweiter Anschlag
- 56: dritter Anschlag
- 57: Gleitlagerfläche
- 58: Radiallager

## Patentansprüche

1. Klemmrollenschaltwerk (1), mit einem Antriebselement (10), das aus einer ruhenden Ausgangsstellung heraus mittels Betätigung eines Schwenkhebels (3) in entgegengesetzten Richtungen auslenkbar ist, und mit wenigstens einem Abtriebselement (5), welche beiden Elemente gemeinsam mit einander zugewandten Klemmflächen sich in entgegengesetzten Richtungen verjüngende, keilförmige Klemmspalten (37, 38) begrenzen, in denen Klemmrollen (39) angeordnet sind, die in der Ausgangsstellung des Antriebselementes (10) von einem ersten gestellfesten Anschlag (42) außer Klemmeingriff mit den Klemmflächen gehalten sind, **dadurch gekennzeichnet, daß** das Antriebselement (10) zwei in entgegengesetzten Richtungen drehbare Antriebsteile (13, 14) umfaßt, die in der Ausgangsstellung des Antriebselementes (10) beide gestellfest abgestützt sind, wobei der Schwenkhebel (3) in der einen ausgelenkten Richtung das eine Antriebsteil (13) und in der entgegengesetzten ausgelenkten Richtung das andere Antriebsteil (14) formschlüssig mitnimmt.

2. Klemmrollenschaltwerk nach Anspruch 1, bei dem beide Antriebsteile (13, 14) jeweils mit wenigstens einer die eine Klemmfläche bildenden Klemmrampe (34, 35) versehen sind, wobei die von den Klemmrampen (34) des einen Antriebsteiles (13) begrenzten keilförmigen Klemmspalten (37) sich in der einen Richtung verjüngen und die von den Klemmrampen (35) des arideren Antriebsteiles (14) begrenzten Klemmspalten (38) sich in der entgegengesetzten Richtung verjüngen.

3. Klemmrollenschaltwerk nach Anspruch 1, bei dem eine drehfest mit dem Schwenkhebel verbundene Schaltscheibe (12) vorgesehen ist, die in der einen Richtung das eine Antriebsteil (13) und die in der anderen Richtung das andere Antriebsteil (14) formschlüssig mitnimmt.

4. Klemmrollenschaltwerk nach Anspruch 2, bei dem die dem jeweils mitgenommenen Antriebsteil (13, 14) zugeordneten Klemmrollen (39) im Klemmeingriff mit den Klemmflächen sind, wobei das Abtriebselement (15) gemeinsam mit dem Antriebsteil (13, 14) ausgelenkt wird, und wobei die dem jeweils anderen Antriebsteil (13, 14) zugeordneten Klemmrollen (39) von dem gestellfesten ersten Anschlag (42) außer Klemmeingriff mit den Klemmflächen gehalten sind.

5. Klemmrollenschaltwerk nach Anspruch 1, bei dem zwei einander benachbarte, je von einem der beiden Antriebsteile (13,14) begrenzte keilförmige Klemmspalten (37, 38) mit ihren verjüngten Enden einander zugewandt sind, wobei der erste gestellfeste Anschlag (42) zwischen die beiden keilförmigen Klemmspalte (37, 38) eingreift und in der ruhenden Ausgangsstellung des Antriebselementes (10) die in den beiden keilförmigen Klemmspalten (37, 38) angeordneten Klemmrollen (39) außer Klemmeingriff hält.

6. Klemmrollenschaltwerk nach Anspruch 1, bei dem in der ruhenden Ausgangsstellung des Antriebselementes (10) das eine Antriebsteil (14) an einen zweiten gestellfesten Anschlag (55) und das andere Antriebsteil (13) unter Federkraft an einen dritten gestellfesten Anschlag (56) angefedert sind.

7. Klemmrollenschaltwerk nach Anspruch 6, bei dem die beiden Antriebsteile (13,14) jeweils aus einer ausgelenkten Position unter der Wirkung der Federkraft in ihre Ausgangsposition hineingefedert werden.

8. Klemmrollenschaltwerk nach Anspruch 1, bei dem die beiden Antriebsteile (13, 14) um eine gemeinsame Drehachse schwenkbar und axial hintereinander angeordnet sind.

9. Klemmrollenschaltwerk nach Anspruch 8, bei dem die beiden Antriebsteile (13,14) jeweils mehrere über den Umfang verteilt angeordnete Finger (26, 27) aufweisen, wobei wenigstens ein Finger (26, 27) des einen Antriebsteils (13, 14) und wenigstens ein Finger (26, 27) des anderen Antriebsteils (13, 14) zwischen zwei umfangsseitig einander benachbarte Finger (26, 27) des jeweils anderen Antriebsteils (13, 14) mit Schaltspiel in Umfangsrichtung eingreifen.

10. Klemmrollenschaltwerk nach Anspruch 9, bei dem der Finger (26, 27) des um einen Schalthub ausgelenkten Antriebsteiles (13, 14) gegen einen benachbarten Finger (26, 27) des anderen, an seinem gestellfesten Anschlag (55, 56) abgestützten Antriebsteiles (13,14) anschlägt.

11. Klemmrollenschaltwerk nach Anspruch 10, bei dem zwischen zwei einander benachbarten, ineinander greifenden Fingern (26, 27) jeweils eine Druckfeder (41) angeordnet ist, die mit ihrem einen Ende an dem einen Finger (26) und die mit ihrem anderen Ende an dem anderen Finger (27) abgestützt ist.

12. Klemmrollenschaltwerk nach Anspruch 1, bei dem das Abtriebselement (10) ein ringförmiges Abtriebsteil (15.) aufweist, an dessen Innenumfang eine die Klemmfläche bildende zylindrische Klemmbahn (36) ausgebildet ist.

13. Klemmrollenschaltwerk nach Anspruch 12, bei dem die Finger (26, 27) der beiden Antriebsteile (13, 14) mit den Klemmrampen (34, 35) versehen sind, die gemeinsam mit der zylindrischen Klemmbahn (36) des ringförmigen Abtriebsteils (15) die keilförmigen Klemmspalten (37, 38) begrenzen.

14. Klemmrollenschaltwerk nach Anspruch 1, das in einem gestellfesten Gehäuse (5) angeordnet ist, wobei das Abtriebsteil (15) mittels eines Radiallagers (18) in dem Gehäuse (5) gelagert ist.

15. Klemmrollenschaltwerk nach Anspruch 13, bei dem das Abtriebsteil (15) umfangsseitig mit einer Gleitlagerfläche (32) versehen ist, die an der als Gleitlagerfläche (31) ausgebildeten Innenwand des Gehäuses (5) radial gelagert ist.

## Claims

1. Clamp roller ratchet mechanism (1) having a drive element (10) which can be deflected out of an initial resting position by actuating a pivot lever (3) in opposite directions, and having at least one power take-off element (5), these two elements together defining, with their facing clamping surfaces, wedge-shaped clamping slots (37, 38) tapering in opposite directions in which clamp rollers (39) are arranged, which are held out of clamping engagement with the clamping surfaces in the starting position of the drive element (10) by a first stop (42) fixed to the structure, **characterised in that** the drive element (10) comprises two drive members (13, 14) which rotate in opposite directions, both of which are supported on the structure in the starting position of the drive element (10), the pivot lever (3) moving one drive member (13) with it in one direction of deflection and moving the other drive member (14) with it in the opposite direction of deflection by interlocking engagement.

2. Clamp roller ratchet mechanism according to claim 1, wherein the two drive members (13, 14) are each provided with at least one clamping ramp (34, 35) forming a clamping surface, the wedge-shaped clamping slots (37) bounded by the clamping ramps (34) of one drive member (13) tapering in one direction, and the clamping slots (38) bounded by the clamping ramps (35) of the other drive member (14) tapering in the opposite direction.

3. Clamp roller ratchet mechanism according to claim 1, wherein a ratchet wheel (12) connected for rotation with the pivot lever is provided, this wheel moving one drive member (13) in one direction and the other drive member (14) in the other direction by interlocking engagement.

4. Clamp roller ratchet mechanism according to claim 2, wherein the clamp rollers (39) associated with the particular drive member (13, 14) being driven are in clamping engagement with the clamping surfaces, the power take-off element (15) being deflected together with the drive member (13, 14), and the clamp rollers (39) associated with the other drive member (13, 14) being held out of clamping engagement with the clamping surfaces by the first stop (42) formed on the structure.

5. Clamp roller ratchet mechanism according to claim 1, wherein two adjacent wedge-shaped clamping slots (37, 38) each defined by one of the two drive members (13, 14) face each other with their tapering ends, the first stop (42) formed on the structure engaging between the two wedge-shaped clamping slots (37, 38) and holding the clamp rollers (39) disposed in the two wedge-shaped clamping slots (37, 38) out of clamping engagement in the initial resting position of the drive element (10).

6. Clamp roller ratchet mechanism according to claim 1, wherein, in the initial resting position of the drive element (10), one drive member (14) is pressed against a second stop (55) formed on the structure and the other drive member (13) is pressed by spring force against a third stop (56) formed on the structure.

7. Clamp roller ratchet mechanism according to claim 6, wherein the two drive members (13, 14) are each spring-biased out of a deflected position, under the effect of spring force, into their starting position.

8. Clamp roller ratchet mechanism according to claim 1, wherein the two drive members (13, 14) are pivotable about a common rotation axis and are arranged axially one behind the other.

9. Clamp roller ratchet mechanism according to claim 8, wherein the two drive members (13, 14) each have a plurality of fingers (26, 27) distributed over the circumference, at least one finger (26, 27) of one drive member (13, 14) and at least one finger (26, 27) of the other drive member (13, 14) engaging between two circumferentially adjacent fingers (26, 27) of the other drive member (13, 14) with ratchet play in the circumferential direction.

10. Clamp roller ratchet mechanism according to claim 9, wherein the finger (26, 27) of the drive member (13, 14), moved along by one stepping stroke, abuts on an adjacent finger (26, 27) of the other drive member (13, 14) supported on its stop (55, 56) formed on the structure.

11. Clamp roller ratchet mechanism according to claim 10, wherein a compression spring (41) is provided between two adjacent interlocking fingers (26, 27), one end of the spring being supported on one finger (26) and its other end being supported on the other finger (27).

12. Clamp roller ratchet mechanism according to claim 1, wherein the power take-off element (10) has an annular power take-off member (15) having, on its inner circumference, a cylindrical clamping strip (36) forming the clamping surface.

13. Clamp roller ratchet mechanism according to claim 12, wherein the fingers (26, 27) of the two drive members (13, 14) are provided with the clamping ramps (34, 35) which define the wedge-shaped clamping slots (37, 38) in conjunction with the cylindrical clamping strip (36) of the annular power take-off member (15).

14. Clamp roller ratchet mechanism according to claim 1, which is arranged in a housing (5) secured to the structure, the power take-off member (15) being mounted in the housing (5) by means of a radial bearing (18).

15. Clamp roller ratchet mechanism according to claim 13, wherein the power take-off element (15) is provided around its circumference with a friction bearing surface (32) which is radially mounted on the inner wall of the housing (5) constructed as a friction bearing surface (31).

## Revendications

1. Mécanisme à galets de serrage (1) comprenant un élément d'entraînement (10) qui peut être dégagé d'une position de repos par l'actionnement d'un levier basculant (3) dans des directions opposées et au moins une pièce de sortie (15), ces deux éléments délimitant en commun avec des surfaces de serrage tournées l'une vers l'autre des intervalles de serrage (37, 38) en forme de coins qui vont en diminuant dans des directions opposées et reçoivent des galets de serrage (39), qui en position de repos de l'élément d'entraînement (10) sont tenus par une première butée (42) solidaire du bâti, hors de leur prise de serrage avec les surfaces de serrage,
**caractérisé en ce que**
l'élément d'entraînement (10) comprend deux pièces d'entraînement (13, 14) tournant dans des directions opposées, et qui sont appuyées toutes deux solidairement au bâti lorsque l'élément d'entraînement (10) est en position de repos,
le levier basculant (3) entraînant dans une direction de débattement, l'une des pièces d'entraînement (13) et pour la direction de débattement opposée, l'autre pièce d'entraînement (14) par une liaison par la forme.

2. Mécanisme à galets de serrage selon la revendication 1,
dans lequel
les deux pièces d'entraînement (13, 14) sont munies chaque fois d'au moins une rampe de serrage (34, 35) formant une surface de serrage, les intervalles de serrage (37) en forme de coins délimités par les rampes de serrage (34) d'une pièce d'entraînement (13) vont en rétrécissant dans une direction et les intervalles de serrage (38) délimités par les rampes de serrage (35) de l'autre pièce d'entraînement (14) vont en diminuant dans la direction opposée.

3. Mécanisme à galets de serrage selon la revendication 1,
dans lequel
un disque de commutation (12) relié solidairement en rotation au levier basculant, entraîne par une liaison par la forme une pièce d'entraînement (13) pour une direction et l'autre pièce d'entraînement (14) pour l'autre direction.

4. Mécanisme à galets de serrage selon la revendication 2,
dans lequel
les galets de serrage (39) associés à chaque pièce d'entraînement (13, 14) respectivement entraînées, sont en prise de serrage avec les surfaces de serrage,
la pièce de sortie (15) étant entraînée en commun avec la pièce d'entraînement (13, 14) et les galets de serrage (39) associés chaque fois à l'autre pièce d'entraînement (13, 14) sont maintenus par la première butée (42) solidaire du bâti hors de prise de serrage sur les surfaces de serrage.

5. Mécanisme à galets de serrage selon la revendication 1,
dans lequel
deux intervalles de serrage (37, 38) en forme de coins, voisins, délimités chaque fois par l'une des deux pièces d'entraînement (13, 14) tournées l'une vers l'autre par leurs extrémités rétrécies, la première butée (42) solidaire du bâti, pénétrant entre les deux intervalles (37, 38) en forme de coins, et en position de sortie de l'élément d'entraînement (10), au repos, cette première butée maintient hors de prise de serrage les galets de serrage (39) situés dans les deux intervalles de serrage en forme de coins (37, 38).

6. Mécanisme à galets de serrage selon la revendication 1,
dans lequel
lorsque l'élément d'entraînement (10) est en position de sortie au repos, la pièce d'entraînement (14) est appliquée élastiquement contre une seconde butée (55) fixe et l'autre pièce d'entraînement (13) est appliquée par une force de ressort contre une troisième butée (56).

7. Mécanisme à galets de serrage selon la revendication 6,
dans lequel
les deux pièces d'entraînement (13, 14) sont engagées par ressort dans leur position de sortie à partir d'une position déplacée, sous l'action de la force de ressort.

8. Mécanisme à galets de serrage selon la revendication 1,
dans lequel
les deux pièces d'entraînement (13, 14) peuvent pivoter autour d'un axe de rotation commun et sont placées axialement l'une derrière l'autre.

9. Mécanisme à galets de serrage selon la revendication 8,
selon lequel
les deux pièces d'entraînement (13, 14) comportent chacune plusieurs doigts (26, 27) répartis à la périphérie, et au moins un doigt (26, 27) d'une pièce d'entraînement (13, 14) et au moins un doigt (26, 27) de l'autre pièce d'entraînement (13, 14) viennent entre deux doigts (26, 27) voisins du côté périphérique de l'autre pièce d'entraînement (13, 14) avec du jeu de commutation dans la direction périphérique.

10. Mécanisme à galets de serrage selon la revendication 9,
dans lequel
le doigt (26, 27) de la pièce d'entraînement (13, 14) déplacée d'une course de commutation, vient contre un doigt voisin (26, 27) de l'autre pièce d'entraînement (13, 14) appuyée contre sa butée (55, 56) solidaire du bâti.

11. Mécanisme à galets de serrage selon la revendication 10,
dans lequel
entre deux doigts (26, 27) s'interpénétrant, de manière voisine, on a chaque fois un ressort de compression (41) s'appuyant par une extrémité contre un doigt (26) et par l'autre extrémité contre l'autre doigt (27).

12. Mécanisme à galets de serrage selon la revendication 1,
dans lequel
l'élément de sortie (10) comporte une pièce de sortie (15) annulaire dont la périphérie intérieure est réalisée en forme de chemin de serrage cylindrique (36) constituant la surface de serrage.

13. Mécanisme à galets de serrage selon la revendication 12,
**caractérisé en ce que**
les doigts (26, 27) des deux pièces d'entraînement (13, 14) sont munis de rampes de serrage (34, 35) délimitant en commun avec le chemin de serrage cylindrique (36) de la pièce de sortie annulaire (15), les intervalles de serrage (37, 38) en forme de coins.

14. Mécanisme à galets de serrage selon la revendication 1,
**caractérisé en ce qu'**
il est monté dans un boîtier (5) solidaire du bâti et la pièce de sortie (15) est montée dans le boîtier (5) par l'intermédiaire d'un palier radial (18).

15. Mécanisme à galets de serrage selon la revendication 13,
dans lequel
la pièce de sortie (15) comporte à sa périphérie une surface de palier lisse (32) montée radialement contre la paroi intérieure du boîtier (5) réalisé en forme de surface de palier lisse (31).
